# EUROPEAN PATENT APPLICATION

(11) **EP 4 825 799 A1**
(43) Date of publication of application: **21.10.2026**
(21) Application number: 24904461.1
(22) Date of filing: 16.12.2024
(51) Int. Cl.: C01B 33/02, C01B 32/00, H01M 4/36, H01M 4/587, H01M 4/38, H01M 4/02

(54) **SILICON-CARBON COMPOSITE, NEGATIVE ELECTRODE ACTIVE MATERIAL, METHOD FOR MANUFACTURING NEGATIVE ELECTRODE ACTIVE MATERIAL, AND NEGATIVE ELECTRODE COMPRISING NEGATIVE ELECTRODE ACTIVE MATERIAL**

(30) Priority: 14.12.2023 KR 20230181822
(71) Applicant: POSCO Holdings Inc., Pohang-si, Gyeongsangbuk-do 37859 (KR)
(72) Inventor: KIM, Dae-Hyun, Pohang-si, Gyeongsangbuk-do 37877 (KR); YOU, Seung-Jae, Pohang-si, Gyeongsangbuk-do 37877 (KR); WOO, Jung-Gyu, Pohang-si, Gyeongsangbuk-do 37877 (KR); KIM, Jin-Won, Pohang-si, Gyeongsangbuk-do 37877 (KR)
(74) Representative: Pfenning, Meinig & Partner mbB
(86) International application number: PCT/KR2024/097007
(87) International publication number: WO 2025/127898

(57) **Abstract**

According to exemplary embodiments of the present invention, provided is a silicon-carbon composite capable of improving lifespan characteristics of a secondary battery. The silicon carbon-composite is a silicon-carbon composite for a negative electrode active material, comprising a carbon matrix and silicon nanoparticles captured in the carbon matrix, wherein the surface roughness (Rq) of the silicon-carbon composite may be 4-50 nm.

## Description

### Technical Field

The present disclosure relates to a silicon-carbon composite, a negative electrode active material, a method for manufacturing the negative electrode active material, and a negative electrode including the negative electrode active material.

### Background Art

Recently, as electronic devices have rapidly become more portable and wireless, there is a growing demand for secondary batteries that are small, lightweight, and have a high energy density as a power source for driving such devices. In addition, not only for small-scale consumer applications but also for large-scale secondary batteries for applications such as power storage systems and electric vehicles, high power characteristics, long-term durability, and safety are required.
secondary battery has a structure in which an electrode assembly, which includes a positive electrode, a negative electrode, and a separator disposed between the positive and negative electrodes, and an electrolyte are housed in an outer casing. An electrode includes an electrode current collector and an electrode active material layer located on at least one side of the electrode current collector. Specifically, the positive electrode includes a positive electrode current collector and a positive electrode active material layer located on at least one surface thereof. The negative electrode includes a negative electrode current collector and a negative electrode active material layer located on at least one surface thereof.

Secondary batteries can be classified into lead-acid batteries, nickel (Ni)-cadmium (Cd) batteries, nickel (Ni)-metal hydride (MH) batteries, and lithium batteries, depending on the type of negative electrode active material and positive electrode active material. Among these, the demand for lithium secondary batteries, which are excellent in energy density, power characteristics, and usage time, is increasing.

The secondary battery reaction of a lithium secondary battery occurs through a chemical reaction in which lithium ions (Li+) move between the positive electrode active material and the negative electrode active material.

In this secondary battery field, the lifespan characteristics of a secondary battery are directly related to the long-term performance of devices that use the secondary battery as a power source, and thus much research is ongoing.

(Patent Document 1) Korean Patent Publication No. 10-1825919.

### Summary of Invention

### Technical Problem

An object to be solved by the technical idea of the present disclosure is to provide a silicon-carbon composite that can improve the lifespan characteristics of a secondary battery.

Another technical aspect of the present disclosure is to provide a negative electrode active material that can improve the lifespan characteristics of a secondary battery.

Another technical aspect of the present disclosure is to provide a method capable of manufacturing a negative electrode active material that can improve the lifespan characteristics of a secondary battery.

Still another technical aspect of the present disclosure is to provide a negative electrode including a negative electrode active material that can improve the lifespan characteristics of a secondary battery.

The objects of the present disclosure are not limited to the above-mentioned contents. A person of ordinary skill in the art to which the present disclosure pertains will have no difficulty in understanding additional objects of the present disclosure from the overall description of the present specification.

### Solution to Problem

A According to exemplary embodiments of the present disclosure, a silicon-carbon composite is provided. The silicon-carbon composite is a silicon-carbon composite for a negative electrode active material including a carbon matrix and silicon nanoparticles captured in the carbon matrix, wherein a surface roughness (Rq) of the silicon-carbon composite may be 4 to 50 nm.

A D90 of the silicon nanoparticles may be 180 nm or less.

The silicon nanoparticles may be included in an amount of 35 to 60 wt%.

The carbon matrix may be included in an amount of 35 to 55 wt%.

The carbon matrix may include a crystalline carbon and an amorphous carbon.

A content of the crystalline carbon may be 10 to 25 wt%. A content of the amorphous carbon may be 25 to 40 wt%.

The crystalline carbon may include at least one selected from the group consisting of artificial graphite, flake graphite, earthy graphite, expanded graphite, graphene, and combinations thereof.

A D50 of the crystalline carbon may be 5 to 10 µm.

The amorphous carbon may include any one selected from the group consisting of coal-based pitch, petroleum-based pitch, coal tar, polyacrylic acid (PAA), polyvinyl alcohol (PVA), and combinations thereof.

According to another exemplary embodiment of the present disclosure, a negative electrode active material is provided. The negative electrode active material includes a silicon-carbon composite including silicon nanoparticles and a carbon matrix; and a coating layer distributed on a surface of the silicon-carbon composite, wherein the coating layer may include carbon nanotubes and a residual binder distributed on the surface of the silicon-carbon composite.

The carbon nanotubes may be included in an amount of 0.1 to 0.5 parts by weight, based on 100 parts by weight of the silicon-carbon composite.

The residual binder may be included in an amount of 0.1 to 1 part by weight, based on 100 parts by weight of the silicon-carbon composite.

A moisture content of the negative electrode active material may be 0.6 to 2.0%.

The residual binder may include any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.

According to another exemplary embodiment of the present disclosure, a method for manufacturing a negative electrode active material is provided. The method for manufacturing the negative electrode active material includes: pulverizing a silicon raw material to prepare silicon nanoparticles; mixing and drying the silicon nanoparticles and a crystalline carbon to obtain a silicon-crystalline carbon precursor; binding the silicon-crystalline carbon precursor with an amorphous carbon precursor to obtain a mixture; heat-treating the mixture in an inert atmosphere at 700 to 1000°C to obtain a silicon-carbon composite; mixing the silicon-carbon composite with a coating layer precursor solution including carbon nanotubes and a binder to obtain a slurry; and drying the slurry in an air atmosphere at 20 to 100°C.

In the step of obtaining the silicon nanoparticles, the pulverizing of the silicon raw material may be performed through ball milling using beads, wherein a diameter of the beads may be less than twice a D99 of the silicon raw material.

In the step of obtaining the silicon nanoparticles, the pulverizing of the silicon raw material may be wet pulverization using an organic solvent including ethanol with a purity of 99.9%.

In the step of obtaining the silicon nanoparticles, a D90 of the silicon nanoparticles may be 180 nm or less.

A D50 of the crystalline carbon may be 5 to 10 µm.

A surface roughness (Rq) of the silicon-carbon composite may be 4 to 50 nm.

The method for manufacturing the negative electrode active material may further comprising pressure molding of pressurizing the mixture of the silicon-crystalline carbon precursor and the amorphous carbon precursor.

The binder may include any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.

### Advantageous Effects of Invention

The silicon-carbon composite according to exemplary embodiments of the present disclosure includes nano-scale silicon particles, thereby improving the lifespan characteristics of a secondary battery, and at the same time, includes a carbon matrix, thereby improving the characteristics of the secondary battery.

The negative electrode active material according to another exemplary embodiment of the present disclosure has a structure in which carbon nanotubes and a residual binder are distributed on the surface of the above-described silicon-carbon composite. As a result, the lifespan characteristics of a secondary battery can be improved.

The method for manufacturing a negative electrode active material according to another exemplary embodiment of the present disclosure can manufacture the negative electrode active material at a relatively low temperature, thereby improving the manufacturing efficiency of the negative electrode active material.

The various and beneficial advantages and effects of the present disclosure are not limited to the above-mentioned contents, and will be more easily understood in the course of describing specific embodiments of the present disclosure.

### Brief Description of Drawings

FIG. 1 is an SEM photograph showing a surface of a negative electrode active material according to Example 2.
FIG. 2 is an SEM photograph showing a surface of a negative electrode active material according to Comparative Example 3.

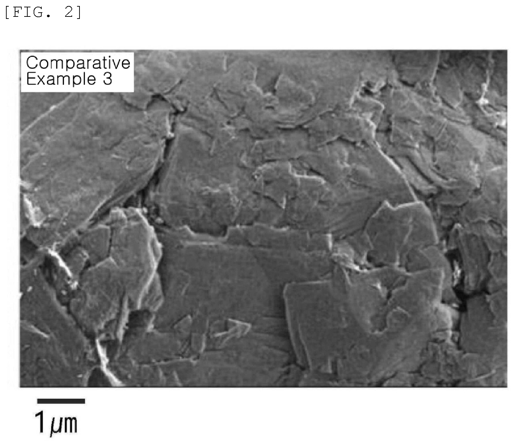

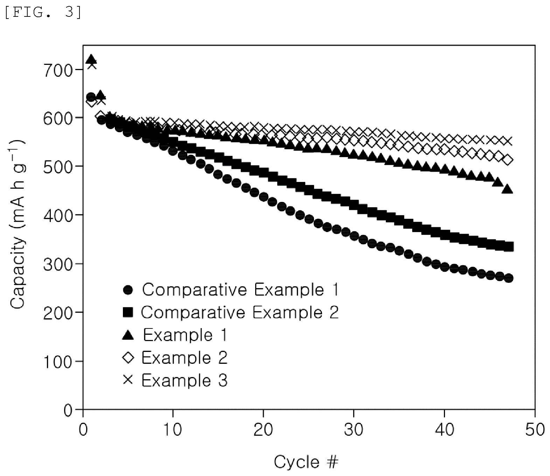

FIG. 2 is a set of graphs showing the lifespan characteristics of secondary batteries according to the Examples and Comparative Examples.

### Best Mode for Invention

Hereinafter, preferred embodiments of the present disclosure will be described in detail with reference to the accompanying drawings. Prior to this, the terms or words used in the present specification and claims should not be construed as being limited to their ordinary or dictionary meanings, and should be interpreted with meanings and concepts consistent with the technical idea of the present disclosure, based on the principle that the inventor can appropriately define the concept of terms to describe his or her own invention in the best way.

Hereinafter, when describing with reference to the drawings, the same or corresponding components will be given the same reference numerals, and redundant descriptions thereof will be omitted.

In the following embodiments, terms such as first, second, etc., are used not for a limiting sense but for the purpose of distinguishing one component from another.

In the following embodiments, a singular expression includes a plural expression unless the context clearly indicates otherwise.

In the following embodiments, terms such as "comprise" or "have" are intended to indicate the presence of a feature or component described in the specification, and do not preclude the possibility of adding one or more other features or components.

In the drawings, the sizes of components may be exaggerated or reduced for convenience of description. For example, the size and thickness of each component shown in the drawings are arbitrarily shown for convenience of description, and thus the present disclosure is not necessarily limited to what is shown.

If an embodiment can be implemented differently, a specific process order may be performed differently from the described order. For example, two processes described sequentially may be performed substantially simultaneously, or may be performed in the reverse order of the described order.

In addition, in describing the present disclosure, if it is determined that a detailed description of a related known configuration or function may obscure the gist of the present disclosure, the detailed description will be omitted.

In the present disclosure, having a nano-scale size is based on D90 in the particle size distribution. That is, it means that the D90 of the particles is less than 1.0 µm.

In the present disclosure, D50, D10, and D90 can be defined as the particle diameters corresponding to 50%, 10%, and 90% of the cumulative volume, respectively, in the particle size distribution curve of the particles. The D50, D10, and D90 can be measured, for example, using a laser diffraction method. The laser diffraction method is generally capable of measuring particle diameters from the submicron region to several mm, and can obtain results with high reproducibility and high resolution.

Hereinafter, a negative electrode, a negative electrode active material, and a method for manufacturing a negative electrode according to exemplary embodiments of the present disclosure will be described in detail.

### [Negative electrode]

According to exemplary embodiments, a negative electrode may include a negative electrode current collector and a negative electrode active material layer.

The negative electrode current collector is not particularly limited as long as it has high conductivity without causing a chemical change in the battery. As a non-limiting example, the negative electrode current collector may include at least one species among copper, stainless steel, aluminum, nickel, titanium, sintered carbon, copper or stainless steel surface-treated with carbon, nickel, titanium, silver, or the like, and an aluminum-cadmium alloy.

A thickness of the negative electrode current collector may be 3 to 500 µm.

The negative electrode active material layer may be provided on one or both sides of the negative electrode current collector. The negative electrode active material layer can be obtained by coating a negative electrode slurry including a negative electrode binder, a conductive agent, and a negative electrode active material on a negative electrode current collector and drying it.

The negative electrode binder is a component that assists in the binding between the negative electrode active material and the current collector. As a non-limiting example, the negative electrode binder may include one or more selected from polyvinyl alcohol, carboxymethyl cellulose/styrene-butadiene rubber, hydroxypropyl cellulose, diacetylene cellulose, polyvinyl chloride, polyvinylpyrrolidone, polytetrafluoroethylene, polyvinylidene fluoride, polyethylene, or polypropylene.

A content of the negative electrode binder is not particularly limited. As a non-limiting example, the negative electrode binder may be added in an amount of 30% by weight or less (including 0%) within the negative electrode active material layer.

The conductive agent is a component for further improving the conductivity of the negative electrode active material. As a non-limiting example, the conductive agent may include one or more selected from graphite such as carbon nanotubes, natural graphite, and artificial graphite; carbon black such as acetylene black, Ketjen black, channel black, furnace black, lamp black, and thermal black; conductive fibers such as carbon fibers and metal fibers; metal powders such as carbon fluoride, aluminum, and nickel powder; conductive whiskers such as zinc oxide and potassium titanate; conductive metal oxides such as titanium oxide; and conductive materials such as polyphenylene derivatives.

A content of the conductive agent is not particularly limited. As a non-limiting example, the conductive agent may be added in an amount of 20% by weight or less (including 0%) within the negative electrode active material layer.

### [Negative electrode Active Material]

According to exemplary embodiments, the negative electrode active material may include a silicon-carbon composite and a coating layer.

According to exemplary embodiments, a surface roughness (Rq) of the silicon-carbon composite may be 4 to 100 nm. More specifically, the surface roughness (Rq) of the silicon-carbon composite may be 4 to 90 nm. The surface roughness (Rq) of the silicon-carbon composite may be 4 to 80 nm. The surface roughness (Rq) of the silicon-carbon composite may be 4 to 60 nm. The surface roughness (Rq) of the silicon-carbon composite may be 4 to 50 nm. The surface roughness (Rq) of the silicon-carbon composite may be 4 to 30 nm. The surface roughness (Rq) of the silicon-carbon composite may be 6 to 30 nm. The surface roughness (Rq) of the silicon-carbon composite may be 9 to 30 nm.

When the surface roughness (Rq) of the silicon-carbon composite is less than 4 nm, the coating layer may not be properly fixed to the surface of the silicon-carbon composite in a subsequent coating process. Therefore, a higher surface roughness (Rq) of the silicon-carbon composite may be advantageous for coating process efficiency. However, if the surface roughness (Rq) of the silicon-carbon composite is excessively high, the coating layer may not be formed uniformly and may be formed thickly in localized areas. This may increase the resistance of the negative electrode active material. Alternatively, if the specific surface area of the negative electrode active material increases, it may cause side reactions with the electrolyte during the use of the secondary battery.

The silicon-carbon composite may include silicon nanoparticles, a carbon matrix, and unavoidable impurities included in the manufacturing process. More specifically, the silicon-carbon composite may include a structure in which silicon nanoparticles are captured in the carbon matrix. That is, the silicon-carbon composite may include a structure in which silicon nanoparticles are mechanically bonded while in contact with the carbon matrix.

Conventionally, graphite-based materials with excellent capacity retention characteristics and efficiency have been used as negative electrode active materials. However, graphite-based materials have had a problem of having a relatively low theoretical capacity value and a low discharge capacity ratio. For this reason, research on silicon (Si)-based materials as a negative electrode active material to replace graphite-based materials has continued.

Since silicon-based materials have a high theoretical capacity value and low operating voltage characteristics, when used as a negative electrode active material for a secondary battery, the characteristics of the secondary battery can be improved. However, silicon-based materials have had a problem of deteriorating the lifespan of a secondary battery due to a cracking phenomenon of particles caused by continuous charge/discharge reactions of the secondary battery.

According to exemplary embodiments of the present disclosure, a nano-scale silicon-based material (silicon nanoparticles) can be used as a negative electrode active material for a secondary battery. By using a nano-scale silicon-based material in this way, the occurrence of particle cracking can be minimized. As a result, the lifespan characteristics of the secondary battery can be improved.

More specifically, the silicon nanoparticles may have a D90 of 180 nm or less. More specifically, the silicon nanoparticles may have a D90 of 150 nm or less. The silicon nanoparticles may have a D90 of 100 to 180 nm. The silicon nanoparticles may have a D90 of 100 to 150 nm.

According to exemplary embodiments, the silicon nanoparticles may be included in an amount of 35 to 60 wt%, based on the total weight of the silicon-carbon composite.

To improve the capacity of the secondary battery, it is necessary to increase the content of the silicon nanoparticles. In addition, as the content of the silicon nanoparticles increases, the silicon nanoparticles can be completely captured within the carbon matrix. As a result, the structural stability of the silicon-carbon composite can be improved. However, if the content of the silicon nanoparticles is excessively high, the silicon nanoparticles may not be sufficiently captured in the carbon matrix, which may deteriorate the mechanical properties of the silicon-carbon composite. Furthermore, the silicon nanoparticles may be detached from the carbon matrix.

According to exemplary embodiments, the carbon matrix may be included in an amount of 35 to 55 wt%, based on the total weight of the silicon-carbon composite.

The carbon matrix may be configured to support the silicon nanoparticles. More specifically, the silicon nanoparticles can be in direct contact with and mechanically bonded to the carbon matrix. As a result, the carbon matrix can support the silicon nanoparticles while maintaining contact with them. In addition, even if the silicon nanoparticles undergo volume expansion due to charge/discharge reactions of the secondary battery, electrical contact with other internal components of the secondary battery (e.g., the negative electrode current collector) can be maintained through the carbon matrix.

The carbon matrix may include a crystalline carbon and an amorphous carbon.

The crystalline carbon can compensate for the electrical properties of the silicon nanoparticles and improve the charge/discharge reversibility of the secondary battery.

According to exemplary embodiments, the crystalline carbon may be included in an amount of 10 to 25 wt%, based on the total weight of the silicon-carbon composite. If the content of the crystalline carbon is less than 10 wt%, the effect of compensating for the electrical properties of the silicon nanoparticles may be insignificant. However, if the content of the crystalline carbon exceeds 25 wt%, the electrical properties may be improved, but the silicon nanoparticles may not be captured in the carbon matrix. This may excessively increase the specific surface area of the silicon-carbon composite. In this case, excessive side reactions between the silicon-carbon composite and the electrolyte may be caused during the charge/discharge process of the secondary battery, thereby deteriorating the lifespan characteristics of the secondary battery. Furthermore, the content of the silicon nanoparticles may decrease, leading to a deterioration in the capacity of the secondary battery.

According to exemplary embodiments, a D50 of the crystalline carbon may be 5 to 10 µm.

As a non-limiting example, the crystalline carbon may include at least one selected from the group consisting of artificial graphite, flake graphite, earthy graphite, expanded graphite, graphene, and combinations thereof.

According to exemplary embodiments, the amorphous carbon may be included in an amount of 25 to 40 wt%, based on the total weight of the silicon-carbon composite.

The amorphous carbon can function as a binder that stably supports the crystalline carbon and the silicon nanoparticles. As such, the amorphous carbon allows the crystalline carbon and the silicon nanoparticles to be physically and electrically connected. As a result, even if the charge/discharge cycle of the secondary battery is repeated, the structure of the silicon-carbon composite can be prevented from collapsing, and the low electrical conductivity of the silicon nanoparticles can be more effectively compensated for.

According to exemplary embodiments, the amorphous carbon may include any one selected from the group consisting of coal-based pitch, petroleum-based pitch, coal tar, polyacrylic acid (PAA), polyvinyl alcohol (PVA), and combinations thereof.

More specifically, the amorphous carbon may include a coal-based pitch having a fixed carbon content of 50 wt% or more. As a non-limiting example, the fixed carbon content of the coal-based pitch may be 60 to 80 wt%.

As the fixed carbon content of the coal-based pitch increases, a conductive path electrically connected to the silicon nanoparticles having low electrical conductivity can be created, thereby inducing an increase in capacity and efficiency. In addition, when the fixed carbon content of the coal-based pitch satisfies the above-mentioned range, the internal pores of the carbon matrix can be reduced to lower the specific surface area. As a result, during the use of the secondary battery, side reactions between the negative electrode active material and the electrolyte can be reduced, which can contribute to an increase in the initial efficiency of the secondary battery.

As a non-limiting example, a beta-resin (β-resin) value of the coal-based pitch may be 20 or more. More specifically, the beta-resin value of the coal-based pitch may be 25 to 40. The beta-resin value of the coal-based pitch may be 25 to 35.

The beta-resin (β-resin) value refers to the value obtained by subtracting the quinoline-insoluble content from the benzene-insoluble content. This beta-resin value is proportional to the coking property. According to exemplary embodiments, when the beta-resin (β-resin) value satisfies the above range, the internal pores of the silicon-carbon composite can be reduced, thereby stably maintaining the structure in which the silicon nanoparticles are in contact with (captured by) the carbon matrix. Therefore, by using the negative electrode active material according to the exemplary embodiments, a secondary battery having excellent lifespan characteristics and electrode plate expansion characteristics can be realized.

As a non-limiting example, the silicon-carbon composite may include unavoidable impurities from the manufacturing process. As one example, the unavoidable impurity may be an oxide film formed on the surface of the silicon nanoparticles. The remainder of the silicon-carbon composite, excluding the silicon nanoparticles and the carbon matrix, may be such unavoidable impurities.

The coating layer may be distributed on the surface of the silicon-carbon composite. The coating layer can suppress the volume expansion of the silicon-carbon composite during the use of the secondary battery. As a result, the lifespan characteristics of the secondary battery can be improved. In addition, the electrical conductivity of the negative electrode active material can be improved to enhance the characteristics of a secondary battery utilizing the negative electrode active material.

The coating layer may refer to a layer provided with a predetermined thickness on the surface of the silicon-carbon composite. Alternatively, all substances distributed on the surface of the silicon-carbon composite may be collectively referred to as the coating layer. What is important is that by distributing the components of the coating layer, which will be described later, on the surface of the silicon-carbon composite, the lifespan characteristics of the secondary battery can ultimately be improved.

According to exemplary embodiments, the coating layer may include carbon nanotubes (CNT) and a residual binder.

The carbon nanotubes may be distributed on the surface of the silicon-carbon composite. The carbon nanotubes according to exemplary embodiments may be included in an amount of 0.1 to 0.5 parts by weight, based on 100 parts by weight of the silicon-carbon composite.

The carbon nanotubes can improve the electrical properties of the silicon-carbon composite. As a result, if the negative electrode active material according to the exemplary embodiments is employed, the electrical resistance of the negative electrode can be reduced, thereby improving the characteristics of the secondary battery. To this end, the carbon nanotubes may be included in an amount of 0.1 parts by weight or more. However, if the carbon nanotubes exceed 0.5 parts by weight, the carbon nanotubes may agglomerate during the manufacturing process. In this case, the coating efficiency of the silicon-carbon composite may be reduced. Furthermore, the volume expansion of the silicon-carbon composite cannot be sufficiently suppressed, which may lead to a deterioration in the lifespan characteristics of the secondary battery. In addition, due to the agglomerated carbon nanotubes, the production efficiency in the classification process of the negative electrode active material deteriorates, which may increase the unit cost of the negative electrode active material.

As a non-limiting example, the carbon nanotubes may be any one of single-wall CNTs, thin-wall CNTs, multi-wall CNTs, and combinations thereof. More specifically, the thin-wall CNTs may be carbon nanotubes with 5 or fewer walls. The multi-wall CNTs may be carbon nanotubes with more than 5 walls.

The residual binder may be distributed on the surface of the silicon-carbon composite. The residual binder according to exemplary embodiments may be included in an amount of 0.1 to 1 part by weight, based on 100 parts by weight of the silicon-carbon composite.

The residual binder can further improve the contact efficiency between the carbon nanotubes and the silicon-carbon composite. As a result, the effect of improving the electrical conductivity of the negative electrode active material due to the carbon nanotubes can be further enhanced. However, if an excessive amount of the residual binder is distributed, it may cause the carbon nanotubes to agglomerate, leading to a decrease in coating efficiency. In addition, it may increase the resistance of the negative electrode active material, thereby rather deteriorating the electrical properties of the negative electrode active material.

According to exemplary embodiments, the residual binder may include a shear-thinning aqueous binder. As a non-limiting example, the residual binder may include any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.

According to exemplary embodiments, a percentage of moisture content of the negative electrode active material may be 0.6 to 2.0%. The moisture content of the negative electrode active material refers to the water content of the negative electrode active material. This moisture content of the negative electrode active material can be calculated by drying the negative electrode active material and comparing the weights before and after drying.

If the moisture content of the negative electrode active material is less than 0.6%, it may be that the residual binder is not sufficiently distributed on the surface of the silicon-carbon composite. In this case, the effects due to the above-described residual binder may not be sufficiently achieved. However, if the moisture content of the negative electrode active material is 2.0%, it may be that an excessive amount of the residual binder is distributed on the surface of the silicon-carbon composite. In this case, the residual binder may cause the carbon nanotubes to agglomerate, leading to a deterioration in the coating quality of the silicon-carbon composite.

### [Method for Manufacturing Negative electrode Active Material]

Hereinafter, a method for manufacturing a negative electrode active material according to exemplary embodiments will be described in detail.

According to exemplary embodiments, the negative electrode active material may be manufactured in the order of [preparing silicon nanoparticles - forming a silicon-carbon composite - coating].

The preparation of silicon nanoparticles may be performed by pulverizing a silicon raw material. More specifically, the silicon raw material can be mechanically pulverized. As a result, silicon nanoparticles can be manufactured.

The pulverization of the silicon raw material may be performed through ball milling using beads. More specifically, the silicon raw material can be pulverized by rotating the silicon raw material and the beads together using a pulverizer. At this time, the diameter of the obtained silicon nanoparticles can be controlled by the diameter of the beads.

According to exemplary embodiments, the diameter of the beads may be less than twice the D99 of the silicon raw material. If the diameter of the beads is excessively large compared to the silicon raw material, the silicon pulverization time increases, which may accordingly cause oxidation of the silicon particles.

The pulverization of such a silicon raw material may use a wet pulverization method using an organic solvent. More specifically, a wet pulverization method using an organic solvent including ethanol with a purity of 99.9% can be used. As described above, as the surface area of the silicon particles increases during the pulverization process of the silicon raw material, the silicon particles may be oxidized. To prevent this side reaction, oxidation of the silicon nanoparticles can be prevented by mixing the silicon raw material in anhydrous ethanol. At this time, the solid content ratio may be in the range of 8 to 15%. The solid content during silicon pulverization may refer to the silicon raw material.

As a non-limiting example, during silicon pulverization, the Ball Per Ratio (BPR) of the silicon raw material to the beads may be 5:1. The rotational speed of the pulverizer may be 2000 to 5000 rpm. More specifically, the rotational speed of the pulverizer may be 2000 to 3000 rpm.

The formation of the silicon-carbon composite may include a step of obtaining a silicon-crystalline carbon precursor; an amorphous carbon binding step; and a heat treatment step.

The step of obtaining the silicon-crystalline carbon precursor may be performed by mixing and drying silicon nanoparticles and crystalline carbon particles.

The silicon nanoparticles and the crystalline carbon may be mixed in an organic solvent and provided in the form of a silicon nanoparticle slurry.

As a non-limiting example, the obtained silicon nanoparticle powder and crystalline carbon particle powder may be mixed in a separate organic solvent to provide a silicon nanoparticle slurry. Alternatively, when a wet pulverization method is used for pulverizing the silicon raw material, a silicon nanoparticle slurry may be provided by mixing crystalline carbon particles into the organic solvent containing the pulverized silicon raw material (silicon nanoparticles).

According to exemplary embodiments, a D50 of the crystalline carbon may be 5 to 10 µm. This can compensate for the insufficient electrical properties of the silicon nanoparticles and further improve the charge/discharge reversibility of the secondary battery.

As a non-limiting example, the crystalline carbon may include at least one selected from the group consisting of artificial graphite, flake graphite, earthy graphite, expanded graphite, graphene, and combinations thereof.

Silicon-crystalline carbon precursor particles can be obtained by spray-drying the silicon nanoparticle slurry using a spray dryer.

The amorphous carbon binding step may be performed by mixing the silicon-crystalline carbon precursor particles and an amorphous carbon precursor.

The mixing of the silicon-crystalline carbon precursor particles and the amorphous carbon precursor may be performed by a mechanical milling process. As a non-limiting example, the mechanical milling process may be performed by any one method selected from the group consisting of mechano-fusion, ball milling, and combinations thereof.

As a non-limiting example, the amorphous carbon precursor may include any one selected from the group consisting of coal-based pitch, petroleum-based pitch, coal tar, polyacrylic acid (PAA), polyvinyl alcohol (PVA), and combinations thereof.

According to exemplary embodiments, a pressure molding step of pressurizing the mixture of the silicon-crystalline carbon precursor and the amorphous carbon precursor may be further included. This allows the amorphous carbon precursor, the silicon nanoparticles, and the crystalline nanoparticles to be more closely bound. As a result, in a subsequent heat treatment process, the internal pores of the carbon matrix structure can be minimized, thereby densifying the mixture of the silicon-crystalline carbon precursor and the amorphous carbon precursor. Consequently, the electrochemical properties of the mixture of the silicon-carbon composite and the amorphous carbon precursor can be improved.

As a non-limiting example, a pressure applied to the mixture of the silicon-crystalline carbon precursor and the amorphous carbon precursor may be 1 ton/cm² or less.

As a non-limiting example, after pressure molding, the mixture of the silicon-crystalline carbon precursor and the amorphous carbon precursor may be provided in the form of a block, such as a pellet. In this case, transportation within the manufacturing process can be facilitated, and side reactions of surface oxidation of the mixture of the silicon-crystalline carbon precursor and the amorphous carbon precursor can be minimized by minimizing the surface area.

The heat treatment step may be performed by heat-treating the mixture of the silicon-crystalline carbon precursor and the amorphous carbon precursor in an inert atmosphere at 700 to 1000°C. More specifically, the mixture of the silicon-crystalline carbon precursor and the amorphous carbon precursor may be heat-treated in an inert atmosphere at 700 to 900°C. As a result, amorphous carbon can be provided from the amorphous carbon precursor to the silicon-crystalline carbon precursor. At this time, the provided amorphous carbon physically and electrically connects the silicon nanoparticles and the crystalline carbon, whereby a silicon-carbon composite having a structure in which the silicon nanoparticles are captured in a carbon matrix can be obtained.

After the heat treatment, the silicon-carbon composite can be dry-pulverized and classified. As a non-limiting example, the dry pulverization may be performed by any one of a JET mill, a Pin mill, and a combination thereof.

According to exemplary embodiments, a surface roughness (Rq) of the silicon-carbon composite may be 4 to 100 nm. More specifically, the surface roughness (Rq) of the silicon-carbon composite may be 4 to 90 nm. The surface roughness (Rq) of the silicon-carbon composite may be 4 to 80 nm. The surface roughness (Rq) of the silicon-carbon composite may be 4 to 60 nm. The surface roughness (Rq) of the silicon-carbon composite may be 4 to 50 nm. The surface roughness (Rq) of the silicon-carbon composite may be 4 to 30 nm. The surface roughness (Rq) of the silicon-carbon composite may be 6 to 30 nm. The surface roughness (Rq) of the silicon-carbon composite may be 9 to 30 nm.

When the surface roughness (Rq) of the silicon-carbon composite is less than 4 nm, the coating layer may not be properly fixed to the surface of the silicon-carbon composite in a subsequent coating process. Therefore, a higher surface roughness (Rq) of the silicon-carbon composite may be advantageous for coating process efficiency. However, if the surface roughness (Rq) of the silicon-carbon composite is excessively high, the coating layer may not be formed uniformly and may be formed thickly in localized areas. This may increase the resistance of the negative electrode active material. Alternatively, if the specific surface area of the negative electrode active material increases, it may cause side reactions with the electrolyte during the use of the secondary battery.

The coating may be performed by mixing the silicon-carbon composite and a coating layer precursor solution to provide a slurry, and drying the slurry. As a result, a negative electrode active material according to exemplary embodiments can be obtained.

The coating layer precursor solution may include carbon nanotubes and a binder.

As a non-limiting example, the carbon nanotubes may be any one of thin-wall CNTs, single-wall CNTs, multi-wall CNTs, and combinations thereof.

According to exemplary embodiments, the carbon nanotubes may be included in an amount of 0.1 to 0.5 parts by weight, based on 100 parts by weight of the silicon-carbon composite.

According to exemplary embodiments, the binder may include a shear-thinning aqueous binder. A shear-thinning binder is a non-Newtonian fluid whose viscosity decreases as the applied shear stress increases.

More specifically, the solid content ratio of the coating layer precursor solution mixed with the silicon-carbon composite may be in the range of 50 to 70%. As a result, the coating layer precursor solution can receive sufficient shear stress during the coating process due to its relatively high viscosity. However, if the viscosity of the coating layer precursor solution is maintained excessively high during the coating process of the silicon-carbon composite, a non-uniform coating layer may be formed. In this case, the effect of the coating is reduced, and the capacity per weight of the negative electrode active material may be lowered. Consequently, the performance of the secondary battery may be deteriorated. The solid content may include the silicon-carbon composite.

The aqueous binder may have excellent binding force because it makes point contact with the silicon-carbon composite. As a result, carbon nanotubes can be fixed to the silicon-carbon composite even with a relatively small amount.

Therefore, by using the binder according to an exemplary embodiment, the thickness of the coating layer can be formed thinly, and the coating efficiency of the carbon nanotubes can be improved.

According to exemplary embodiments, the binder may include any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.

According to exemplary embodiments, the binder may be included in an amount of 0.1 to 1 part by weight, based on 100 parts by weight of the silicon-carbon composite. More specifically, the content of the binder may be included in an amount of about 1.5 to 3 times the content of the carbon nanotubes. By controlling the content of the binder included in the coating layer precursor solution to the above-mentioned range, an unnecessary increase in the resistance of the negative electrode active material can be prevented.

According to exemplary embodiments, the drying of the slurry may be performed at a relatively low temperature.

Conventionally, a coating layer was formed on the surface of a negative electrode active material by heat-treating a slurry at a high temperature of 800°C or higher. However, in this case, a problem occurred in that thermal deformation of the coating layer precursor materials and the particles constituting the negative electrode active material was caused, leading to unexpected changes in physical, chemical, and electrical properties.

However, according to exemplary embodiments of the present disclosure, by controlling the component composition of the coating layer precursor solution as described above, slurry drying can be performed even at a relatively low temperature. As a result, changes in the properties of the negative electrode active material due to a high-temperature atmosphere can be prevented. In addition, energy for heating to a high temperature can be saved, and the method for manufacturing a negative electrode active material according to the exemplary embodiments can be easily applied to a large-scale mass production process.

In addition, by drying the slurry at a relatively low temperature, the binder included in the coating layer precursor solution remains on the surface of the silicon-carbon composite. As a result, as described above, the electrode conductivity and electrode adhesion of the negative electrode active material can be further improved.

According to exemplary embodiments, the drying of the slurry may be performed in an air atmosphere at 20 to 100°C. More specifically, the drying of the slurry may be performed in an air atmosphere at 20 to 95°C. The drying of the slurry may be performed in an air atmosphere at 20 to 80°C. The drying of the slurry may be performed in an air atmosphere at 20 to 70°C. The drying of the slurry may be performed in an air atmosphere at 20 to 60°C. The drying of the slurry may be performed in an air atmosphere at 30 to 100°C.

If the drying temperature of the slurry is less than 20°C, an excessively long time may be consumed for drying the slurry. If the drying temperature of the slurry exceeds 100°C, the electrical properties of the coating layer or the negative electrode active material may change due to oxidation of silicon, carbonization of the binder, or cyclization.

### Mode for Invention

Hereinafter, embodiments of the present disclosure will be described in detail so that a person of ordinary skill in the art to which the present disclosure pertains can easily carry them out. However, the present disclosure may be embodied in many different forms and is not limited to the embodiments described herein.

### (Example 1)

Poly-Si was used as a silicon raw material. The silicon raw material was pulverized using a 99.9% pure anhydrous ethanol solution and beads. More specifically, the BPR of the silicon raw material to the beads was 5:1, and the rotational speed of the pulverizer was maintained at 2500 rpm. The size of the pulverized silicon raw material was measured with a nano particle size analyzer (from Beckmann Coulter) to obtain a silicon nanoparticle slurry including silicon nanoparticles with a D90 of 180 nm or less.

Flake graphite as a crystalline carbon was mixed into the silicon nanoparticle slurry, and these were spray-dried to obtain a silicon-crystalline carbon precursor. The silicon-crystalline carbon precursor and a coal-based pitch were mixed by a milling method. The mixture of the silicon-crystalline carbon precursor and the amorphous carbon was put into a mold and uniaxially pressure-molded at a pressure of about 50 tons. Subsequently, the molded body was carbonized in an inert atmosphere at 700 to 1000°C, and then pulverized and classified to obtain a silicon-carbon composite.

The silicon-carbon composite was mixed into a coating layer precursor solution to coat the silicon-carbon composite with a binder and carbon nanotubes. At this time, a coating layer precursor solution including about 0.125 parts by weight of carbon nanotubes and about 0.375 parts by weight of a binder was used, based on 100 parts by weight of the silicon-carbon composite. Carboxymethyl cellulose was used as the binder. Single-wall carbon nanotubes were used as the carbon nanotubes. The coating process was performed by mixing for 5 minutes at 25 rpm using a twisted blade mixer, and then for 30 minutes at 100 rpm. Finally, the coating layer precursor solution mixed with the silicon-carbon composite was dried in an air atmosphere at 100°C to obtain a negative electrode active material.

### (Example 2)

A negative electrode active material was manufactured in the same manner as in Example 1, except that a coating layer precursor solution including 0.25 parts by weight of carbon nanotubes and 0.375 parts by weight of a binder, based on 100 parts by weight of the silicon-carbon composite, was used.

### (Example 3)

A negative electrode active material was manufactured in the same manner as in Example 1, except that a coating layer precursor solution including 0.5 parts by weight of carbon nanotubes and 0.75 parts by weight of a binder, based on 100 parts by weight of the silicon-carbon composite, was used.

### (Comparative Example 1)

A sample was prepared in the same manner as in Example 1, except that the silicon-carbon composite was coated with coal tar and then heat-treated in an inert atmosphere at 800°C or higher.

### (Comparative Example 2)

The silicon-carbon composite was used as a negative electrode active material without performing a coating.

### Experimental Example 1: Confirmation of Coating Degree According to Surface Roughness

The surface roughness (Rq) of the silicon-carbon composite according to Example 2 was measured three times through Atomic Force Microscope (AFM) analysis and is shown in Table 1 below. In addition, as Comparative Example 3, a silicon-carbon composite having the surface roughness (Rq) shown in Table 1 below was prepared.

**[Table 1]**

| **Silicon-Carbon Composite** | **Rq (nm)** |
|---|---|
| | 27.4 |
| Example 2 | 9.27 |
| | 29.8 |
| | 3.15 |
| Comparative Example 3 | 1.69 |
| | 2.91 |

Subsequently, the silicon-carbon composite according to Example 2 and the silicon-carbon composite according to Comparative Example 3 were coated under the same coating conditions as in Example 2 described above.

After coating, a final sample was obtained through sieving, and then the surfaces of the negative electrode active material according to Example 2 and the negative electrode active material according to Example 3 were observed using a scanning electron microscope (SEM).

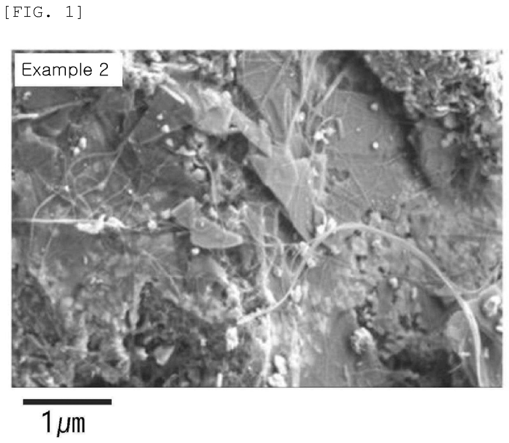

FIG. 1 is an SEM photograph showing surfaces of the negative electrode active materials according to Example 2 and Comparative Example 3.

Referring to FIG. 1, it was confirmed that carbon nanotubes were not properly coated on the surface of Comparative Example 3. This is judged to be because the surface roughness of Comparative Example 3 did not satisfy the range suggested by the present disclosure. In contrast, it was confirmed that carbon nanotubes and a residual binder were distributed in the negative electrode active material according to Example 2. This is judged to be because the surface roughness of the silicon-carbon composite according to Example 2 satisfies the range according to the exemplary embodiments of the present disclosure.

### Experimental Example 2: Confirmation of Moisture Content of Negative electrode Active Material

The negative electrode active material according to Example 2 and the negative electrode active material according to Comparative Example 1 were dried in a drying oven at 120°C. Subsequently, the difference in mass before and after drying was compared to calculate the moisture content, which is shown in Table 2 below.

The moisture content was calculated as follows. [Equation 1] 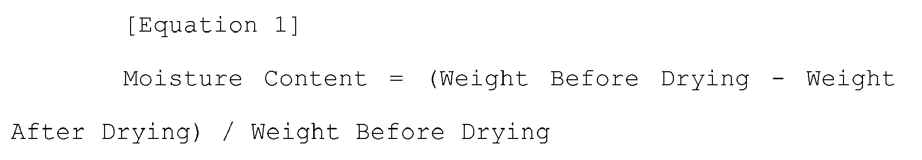 Moisture Content = (Weight Before Drying - Weight After Drying) / Weight Before Drying

**[Table 2]**

| **Classification** | **Moisture Content (%)** | **Average (%)** |
|---|---|---|
| | 1.33 | 1.35 |
| Example 2 | 1.36 | |
| | 1.36 | |
| | 0.55 | |
| Comparative Example 1 | 0.53 | 0.55 |
| | 0.56 | |

As such, it was confirmed that Comparative Example 1, which was subjected to a carbonization treatment in a high-temperature atmosphere, had a moisture content that deviated from the range proposed by the present disclosure. That is, it is interpreted that the binder remaining on the surface of the silicon-carbon composite was not properly distributed in the negative electrode active material according to Comparative Example 1. However, it was confirmed that Example 2, which was dried at a low temperature, satisfied the moisture content range suggested by the present disclosure. That is, it is interpreted that the residual binder was properly distributed on the surface of the silicon-carbon composite.

### Experimental Example 3: Confirmation of Lifespan Characteristics of Secondary Battery

Secondary batteries were manufactured using Examples 1 to 3 and Comparative Examples 1 and 2 described above.

More specifically, a negative electrode slurry was prepared by mixing an active material, a negative electrode binder, and a conductive agent. As the active material, an active material mixture in which the negative electrode active material according to Example 1 and commercially available natural graphite were mixed was used. Carboxymethyl cellulose (CMC) and styrene-butadiene rubber (SBR) were used as the negative electrode binder. The prepared negative electrode slurry was coated on a copper thin film and dried to obtain a negative electrode. Subsequently, a negative electrode, a separator, and a positive electrode were sequentially stacked, and the stacked electrodes were impregnated with an electrolyte to manufacture a CR2032 type secondary battery (coin half cell).

CR2032 type coin half cells were manufactured using the negative electrode active materials according to Example 2, Example 3, Comparative Example 1, and Comparative Example 2, respectively, by the method described above.

Subsequently, charge/discharge tests of the manufactured secondary batteries were conducted in an operating voltage range of 0.005 V to 1.0 V. The charge/discharge current was applied at 0.5 C based on the first 1 C capacity to measure the lifespan for 50 cycles. At this time, the charge cut-off current was set to 0.005 C. For each cycle (charge-discharge), the charge capacity and discharge capacity of the secondary batteries were measured to confirm the charge/discharge efficiency.

FIG. 2 is a set of graphs showing the lifespan characteristics of secondary batteries according to the Examples and Comparative Examples. Among the graphs in FIG. 2, Example 1 shows data for a secondary battery including the negative electrode active material according to Example 1. Example 2 shows data for a secondary battery including the negative electrode active material according to Example 2. Example 3 shows data for a secondary battery including the negative electrode active material according to Example 3. Comparative Example 1 shows data for a secondary battery including the negative electrode active material according to Comparative Example 1. Comparative Example 2 shows data for a secondary battery including the negative electrode active material according to Comparative Example 2.

Referring to FIG. 2, it was confirmed that in the case of the secondary batteries including the negative electrode active materials according to Examples 1, 2, and 3, the charge/discharge efficiency was maintained even when the charge/discharge cycles were repeated. That is, it was confirmed that the lifespan characteristics of a secondary battery can be improved by using a negative electrode active material including a silicon-carbon composite and a coating layer including carbon nanotubes and a residual binder. In contrast, in the case of the secondary batteries including the negative electrode active materials according to Comparative Examples 1 and 2, it was confirmed that a decrease in charge/discharge capacity started from the beginning of the cycles (10 cycles or less), and the charge/discharge capacity could not be maintained. That is, it was confirmed that the lifespan characteristics were inferior. In particular, in the case of Comparative Example 2, which was heat-treated in a high-temperature environment, the most inferior lifespan characteristics were shown.

The present disclosure has been described in more detail above with reference to the drawings, examples, and the like. However, the configurations described in the drawings or examples described in this specification are only one embodiment of the present disclosure and do not represent all of the technical ideas of the present disclosure, and thus it should be understood that various equivalents and modifications that can replace them may exist at the time of filing of the present application.

## Claims

1. A silicon-carbon composite for a negative electrode active material, the silicon-carbon composite comprising:
a carbon matrix; and
silicon nanoparticles captured in the carbon matrix,
wherein a surface roughness (Rq) of the silicon-carbon composite is 4 to 50 nm.

2. The silicon-carbon composite of claim 1, wherein a D90 of the silicon nanoparticles is 180 nm or less.

3. The silicon-carbon composite of claim 1, wherein the silicon nanoparticles are included in an amount of 35 to 60 wt%.

4. The silicon-carbon composite of claim 1, wherein the carbon matrix is included in an amount of 35 to 55 wt%.

5. The silicon-carbon composite of claim 1, wherein the carbon matrix comprises a crystalline carbon and an amorphous carbon.

6. The silicon-carbon composite of claim 5, wherein a content of the crystalline carbon is 10 to 25 wt%, and a content of the amorphous carbon is 25 to 40 wt%.

7. The silicon-carbon composite of claim 5, wherein the crystalline carbon comprises at least one selected from the group consisting of artificial graphite, flake graphite, earthy graphite, expanded graphite, graphene, and combinations thereof.

8. The silicon-carbon composite of claim 5, wherein a D50 of the crystalline carbon is 5 to 10 µm.

9. The silicon-carbon composite of claim 5, wherein the amorphous carbon comprises any one selected from the group consisting of coal-based pitch, petroleum-based pitch, coal tar, polyacrylic acid (PAA), polyvinyl alcohol (PVA), and combinations thereof.

10. A negative electrode active material, comprising:
a silicon-carbon composite comprising silicon nanoparticles and a carbon matrix; and
a coating layer distributed on a surface of the silicon-carbon composite,
wherein the coating layer comprises carbon nanotubes and a residual binder distributed on the surface of the silicon-carbon composite.

11. The negative electrode active material of claim 10, wherein the carbon nanotubes are included in an amount of 0.1 to 0.5 parts by weight, based on 100 parts by weight of the silicon-carbon composite.

12. The negative electrode active material of claim 10, wherein the residual binder is included in an amount of 0.1 to 1 part by weight, based on 100 parts by weight of the silicon-carbon composite.

13. The negative electrode active material of claim 10, wherein the residual binder comprises any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.

14. The negative electrode active material of claim 10, wherein a moisture content of the negative electrode active material is 0.6 to 2.0%.

15. A method for manufacturing a negative electrode active material, the method comprising:
pulverizing a silicon raw material to prepare silicon nanoparticles;
mixing and drying the silicon nanoparticles and a crystalline carbon to obtain a silicon-crystalline carbon precursor;
binding the silicon-crystalline carbon precursor with an amorphous carbon precursor to obtain a mixture;
heat-treating the mixture in an inert atmosphere at 700 to 1000°C to obtain a silicon-carbon composite;
mixing the silicon-carbon composite with a coating layer precursor solution comprising carbon nanotubes and a binder to obtain a slurry; and
drying the slurry in an air atmosphere at 20 to 100°C.

16. The method of claim 15, wherein in the obtaining of the silicon nanoparticles, the pulverizing of the silicon raw material is performed through ball milling using beads, wherein a diameter of the beads is less than twice a D99 of the silicon raw material.

17. The method of claim 15, wherein in the obtaining of the silicon nanoparticles, the pulverizing of the silicon raw material is wet pulverization using an organic solvent comprising ethanol with a purity of 99.9%.

18. The method of claim 15, wherein in the obtaining of the silicon nanoparticles, a D90 of the silicon nanoparticles is 180 nm or less.

19. The method of claim 15, wherein a D50 of the crystalline carbon is 5 to 10 µm.

20. The method of claim 15, wherein a surface roughness (Rq) of the silicon-carbon composite is 4 to 50 nm.

21. The method of claim 15, further comprising pressure molding of pressurizing the mixture of the silicon-crystalline carbon precursor and the amorphous carbon precursor.

22. The method of claim 15, wherein the binder comprises any one selected from the group consisting of carboxymethyl cellulose (CMC), hydroxypropyl cellulose (HPC), hydroxyethyl cellulose (HEC), polyvinylpyrrolidone (PVP), polyethylene oxide (PEO), and combinations thereof.
